# EUROPEAN PATENT APPLICATION

(11) **EP 2 910 436 A1**
(43) Date of publication of application: **26.08.2015**
(21) Application number: 15153970.7
(22) Date of filing: 05.02.2015
(51) Int. Cl.: B60R 21/2338, B60R 21/36

(54) **An impact protection device for pedestrians**

(30) Priority: 19.02.2014 SE 1450194
(71) Applicant: Autoliv Development AB, 447 83 Vårgårda (SE)
(72) Inventor: Baumann, Jan, 25436 Uetersen (DE)
(74) Representative: Sandstedt, Jonas Sven James

(57) **Abstract**

The present invention relates to an airbag arrangement (7, 8) comprising at least one airbag (12; 12a, 12b, 12c) having at least one elongate chamber portion (18; 23), an airbag container (11; 21), and an inflating device (13; 23), the airbag (12; 12a, 12b, 12c) being arranged to be inflated by the inflating device (13; 23) in the case of a collision with a pedestrian when the airbag arrangement (7, 8) is mounted in a vehicle (1). The airbag (12; 22; 12a, 12b, 12c) comprises an elongate reinforcement means (15; 25; 35; 15a, 15b, 15c, 15d) attached to the airbag and to a rigid part of the vehicle, wherein the direction of the reinforcement means is adjoined with the main axis of the elongate airbag chamber portion (18; 23) when inflated.

## Description

The present invention relates to a vehicle pedestrian protection airbag arranged to be inflated by an inflating device in the case of a collision with a pedestrian. The airbag comprises an outer wall, enclosing a total volume. The volume is connected to the inflating device. Alternatively the total volume can comprise at least one inner wall dividing the total volume into a main partial volume and at least one other partial volume.

Today, it is known for vehicles to comprise at least one exterior airbag, intended to be inflated in the case of a collision with a pedestrian and to alleviate the collision force that the pedestrian is subject to. An example of one such exterior airbag is a pedestrian pillar air bag, often termed A-pillar airbag.

JP 2008149785 discloses an A-pillar airbag with cells that are arranged side by side or on top of each other in a symmetrical fashion to stabilize the airbag. The cells are connected with non-return valves.

During a collision event, movement of an A-pillar airbag when it is exerted to a sideways directed force, i.e. from a pedestrian, is undesirable. Should the airbag be moved laterally relative to the A-pillar, then there is a risk of uncovering the hard surface of the A-pillar.

It is an object of the present invention to provide a pedestrian airbag that is arranged for covering at least one A-pillar of a vehicle, which airbag can resist movement when it is exerted to a sideways directed force.

This object is achieved by means of an airbag arrangement according to the appended claims.

According to a preferred embodiment, the invention relates to an airbag arrangement comprising at least one airbag having at least one elongate chamber portion, an airbag container, and an inflating device, the airbag being arranged to be inflated by the inflating device in the case of a collision with an object, for instance a pedestrian, when the airbag arrangement is mounted in a vehicle. The airbag comprises an elongate reinforcement means attached to the airbag at a first portion and it is attached to a rigid part at a second portion, remote from the first portion, wherein the direction of the reinforcement means is adjoined with the main axis of the elongate airbag chamber portion.

The reinforcement means is wound with the elongate airbag chamber portion to form a coil located in the airbag container or housing. The reinforcement means is preferably arranged to extend at least parallel to the direction of the main axis of the elongate airbag chamber portion, in which direction the airbag is unwound during inflation. Generally, the main axis of the elongate airbag chamber portion will coincide with the direction of expansion of the said portion. In order to maintain the reinforcement means in position relative to the elongate airbag chamber portion, it is attached to the airbag at at least the first portion. Suitable attachments can comprise one or more pockets in or on the airbag, where the reinforcement means is inserted through each pocket. The pocket located at the first portion can be closed to contain the free end of the reinforcement means. Alternatively, the reinforcement means can be attached at one or more locations by stitching, by an adhesive or by other suitable means. The first portion is preferably, but not necessarily, the free end of the reinforcement means.

The elongate reinforcement means preferably comprises a flexible band or strip of material. The band is selected relatively thin, to allow it to be wound into a coil, and with a width giving a relatively high stiffness in its lateral direction at right angles to its longitudinal extension, to provide increased stability for the airbag along the main axis of the elongate airbag chamber portion. The band has opposing major surfaces and a width that is significantly greater that its thickness, preferably at least 20 times the thickness.

According to one example, these properties can be achieved by selecting a material having a predetermined minimum yield strength, such as a steel band. In particular, spring steel can be used for this purpose. Using a spring steel has the additional effect of assisting the airbag to extend and position itself during and after inflation. According to a further example, a polymer band can be used.

The elongate reinforcement means can comprise an elongated band having a curved or convex cross-section. If the band has a curved cross-section, the convex portion of the cross-section is arranged to face the center of the wound coil, it can be maintained in a relaxed state while being wound with the airbag in the airbag container. The band will remain in this relaxed state until it is given a relatively small actuating push in its direction of unwinding. The steel band used is unstable, i.e. it can change its shape when subjected to a relatively small force. The force can be achieved by directing a portion of the gas stream from the inflator, e.g. by means of a nozzle or a similar suitable device, onto the band during actuation. A jet of gas impinging onto the band will cause a band with a flat cross-section to assume a concave shape. Similarly, a band with a convex cross-section can assume a flat or a concave shape. This induced change in cross-sectional shape will create a force in the band direction perpendicular to the length axis of said band, which force assists the uncoiling of the band during actuation of the airbag.

One advantage with this solution is that the relaxed wound band will not act with biasing force on the airbag module sealing. A further advantage is that, prior to actuation, the relaxed wound band will assist the airbag to stay in its folded condition. The band is attached to a rigid part of the vehicle at its second portion. At this end the band can either retain its convex cross-section or be flattened to a substantially flat cross-section.

The inflating device can be connected to a release means arranged to trigger unwinding of the wound elongate reinforcement means. The band can be held back by a breakable sealing or cover holding the airbag in its folded, coiled position, which sealing or cover is ruptured or opened upon activation of the inflating device or inflator. It is also possible to provide a release arrangement for the band, which release arrangement is connected with and actuated by the activation of the inflating device. For instance, a gas stream from the inflating device can move a release switch arrangement and release the band.

The band is preferably located so that it is not visible on the airbag surface intended for contact with an object or a pedestrian. It may be positioned on the airbag surface intended for contacting an A-pillar or a windscreen, that is, beneath a pressurized chamber. Hence, when the airbag arrangement is inflated, at least one elongate chamber portion is arranged between an object impacting the airbag arrangement and the elongate reinforcement means adjoined with the main axis of the elongate airbag chamber portion.

Alternatively, the band can be positioned between pressurized chambers. This can be the case when the airbag arrangement comprises a at least one main elongate chamber portion arranged between an object impacting the airbag arrangement and the elongate reinforcement means combined with at least one further chamber portion arranged between the vehicle and the elongate reinforcement means.

According to the invention, the airbag arrangement can comprise one or more elongate reinforcement means. Elongate reinforcement means can be arranged adjacent an associated inflation device for each A-pillar. Hence, for a single airbag arrangement for covering an A-pillar the elongate reinforcement means is arranged in the airbag container at or near the inflation device of the A-pillar airbag arrangement.

Similarly, for an airbag arrangement covering two A-pillars and at least partially an intermediate windscreen, one or more elongate reinforcement means can be arranged in an airbag container having a central inflation device between the A-pillars. Alternatively, one or more elongate reinforcement means can be arranged in the airbag containers at or near the inflation devices adjacent each A-pillar. An elongate reinforcement means can also be arranged in the airbag container at or near one or more inflation devices located between the A-pillars.

Alternatively, at least one additional elongate reinforcement means can be arranged intermediate each inflation device. Each such additional elongate reinforcement means is arranged to extend in the direction of extension of the airbag portion to which it is attached. This direction of extension can be substantially parallel to adjacent elongated reinforcement means in the same airbag arrangement. The additional elongate reinforcement means can have the same or a different longitudinal extension as compared to the elongate reinforcement means arranged at or near an inflation device.

The number of elongate reinforcement means and/or additional elongate reinforcement means used is determined by a comparison between the inherent lateral stiffness of the airbag arrangement and the desired lateral stiffness. Also, the length of the elongate reinforcement means can be selected dependent on the extension of the airbag at that location and/or the required stiffness of the airbag arrangement. Each elongate reinforcement means or any additional elongate reinforcement means has a longitudinal extension of at least 50% of the longitudinal extension of an adjacent elongate chamber portion.

The second portion of the elongate reinforcement means is attached to a fixed portion of the vehicle or a part thereof. Non-limiting examples of suitable locations for fixing the second portion of the reinforcement means include the airbag container, an inflator bracket supporting the inflating device or the vehicle hood.

Although not limited to this use, the airbag arrangement is mainly intended as a vehicle pedestrian protection airbag.

A number of advantages are obtained by means of the present invention. Mainly, the risk of injury to a pedestrian that hits the vehicle when the airbag of the protection airbag arrangement is inflated is reduced.

### BRIEF DESCRIPTION OF THE DRAWINGS

The present invention will now be described more in detail with reference to the appended drawing figures, where:
- Figure 1: shows a schematic plan view of a vehicle;
- Figure 2: shows a schematic side view of a vehicle;
- Figure 3: shows an enlarged view of an airbag arrangement according to the invention;
- Figure 4: shows the airbag in Figure 3 when inflated;
- Figure 5: shows an alternative airbag arrangement according to the invention;
- Figure 6: shows a schematic elongate reinforcement means for an airbag arrangement according to the invention;
- Figure 7: shows a plan view of a vehicle with an inflated airbag according to a first example; and
- Figure 8: shows a plan view of a vehicle with an inflated airbag according to a second example.

### DETAILED DESCRIPTION

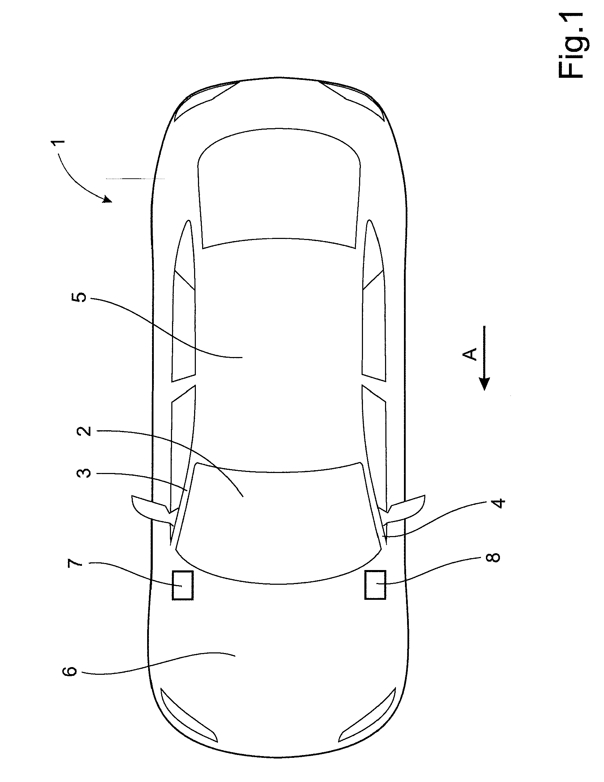

With reference to Figure 1, a vehicle 1 comprises a windscreen 2 and two so-called A-pillars; a first A-pillar 3 at a right-hand side of the windscreen 2 and a second A-pillar 4 at a left-hand side of the windscreen 2. The A-pillars are well-known in the field of vehicles, and run to a roof 5 of the vehicle 1 when inflated. The right-hand side and left-hand side are defined when viewing along the vehicle in its forward running direction A. The vehicle also comprises a hood 6 extending forwards in front of the windscreen 2.

Figure 1 further shows schematic airbag arrangements 7, 8 mounted adjacent each A-pillar 3, 4, wherein a first and a second airbag arrangement 7, 8 is arranged to be actuated and to extend from the rear end of the hood 6, upwards along the respective A-pillar 3, 4 towards the roof 5.

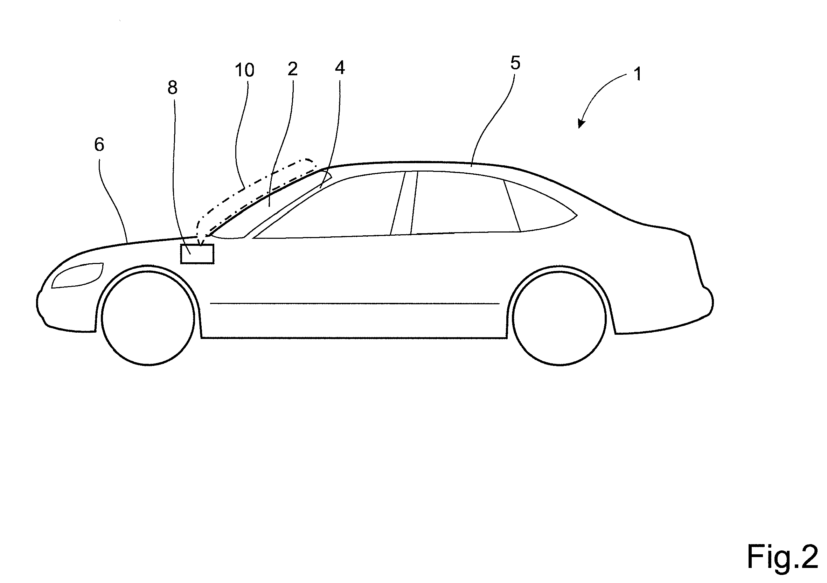

Figure 2 shows a schematic side view of the vehicle pedestrian airbag arrangement 8 in its normal mounted position, as well as the airbag arrangement 8 in its inflated position indicated in dashed lines 10. It should be noted that the schematic airbag arrangement in Figure 2 can be representative of other airbag arrangements than that shown in Figure 1. Examples of alternative arrangements are, for instance, airbags covering the A-pillars only, airbags covering the A-pillars and a portion of the windscreen, and airbags covering the A-pillars and the entire width of the windscreen.

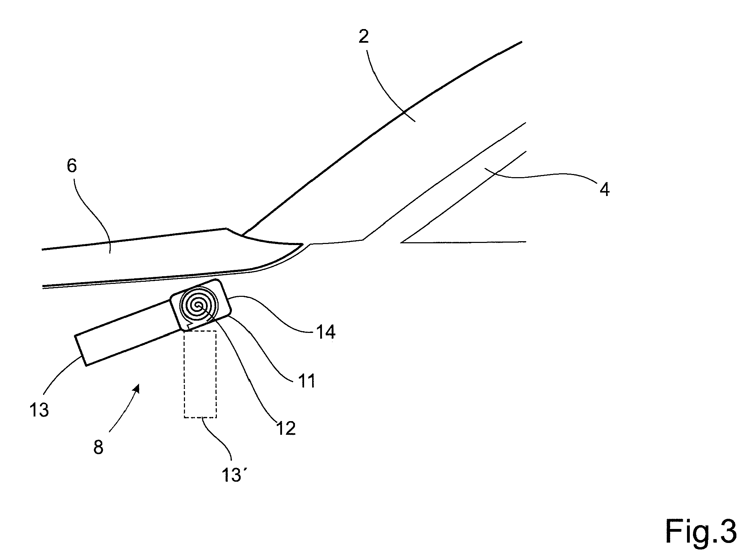

Figure 3 shows an enlarged view of the vehicle pedestrian airbag arrangement 8 in Figure 2. Figure 3 shows a schematic cut-open view exposing the component parts of the airbag arrangement 8.

With reference to Figure 2 and Figure 3, the airbag arrangement 8 is shown mounted in the vehicle 1, positioned adjacent the rear end of the hood 6. The airbag arrangement 8 comprises a housing 11, an airbag 12, a pyrotechnic device 13 arranged for inflating the airbag 12 in the event of a collision, and a lid 14, closing the end of the housing 11 facing the windscreen 2. Figure 3 also shows an alternative positioning of the pyrotechnic device 13' (shown in dashed lines). The airbag 12 is wound into a coil having a spiral cross-section. When inflated by the pyrotechnic device 13 it is arranged to unwind upwards and rearwards to cover at least the A-pillar 4, lifting the rear portion of the hood 6 as it expands.

Generally, terms such as "front" and "rear" relate to the front and rear of the vehicle to which the airbag arrangements 7, 8 are mounted, the front and rear being related to the vehicle's direction of forward running direction A. Terms such as "upper" and "lower" relate to the portions of the airbag facing away from and facing towards an adjacent part of the vehicle, respectively.

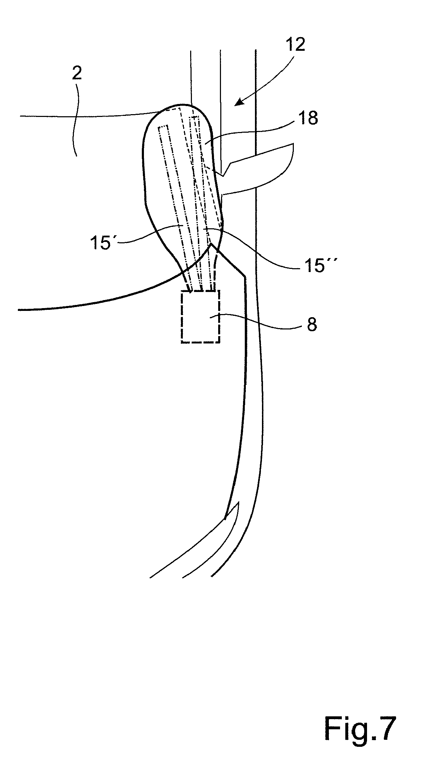

In the event of a collision with a pedestrian, it is desirable that the pedestrian's impact with the vehicle 1 is alleviated. Therefore the airbag 12 is mounted in such a way that when inflated, it is arranged to at least partly cover the windscreen 2 and the A-pillars 3, 4, as indicated in Figure 7. In this way, the inflated airbag 12 absorbs some of the impact force. The windscreen 2 has been found to be a suitable energy absorber and thus not so severe to hit as the A-pillars 3, 4, and the airbag 9 has been shaped accordingly, here shown to have a general U-shape. Other shapes are of course conceivable. It should be noted that a specific airbag folding/packaging will be required in order to allow unfolding of any peripheral portions of the airbag that is being of a different shape than the central chamber of the airbag.

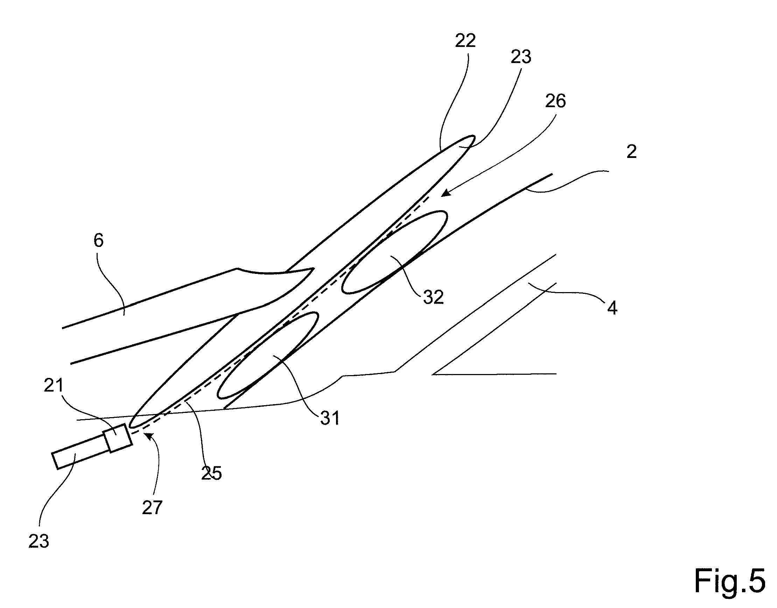

In the case of an airbag covering the windscreen 2 and the A-pillars 3, 4, the housing 8 has a longitudinal extension (not shown) that runs perpendicular to the forward running direction A, and has an extension in the forward running direction A. However, Figures 3-5 only shows a section of the airbag arrangement 8 adjacent to the pyrotechnic device 13 located at the left-hand A-pillar 4. The housing 8 is shown to be positioned in a folded portion 6a of the hood 6 as shown in Figure 3 and Figure 5, but many other types of positioning are conceivable, for example in a plenum part positioned between the hood and the windscreen.

The housing and the rest of the airbag arrangement 8 may be placed at another position (not shown) at the vehicle 1, for example adjacent the roof 5 as a protection for bicyclists which may impact higher up on the vehicle 1 at the occurrence of a collision.

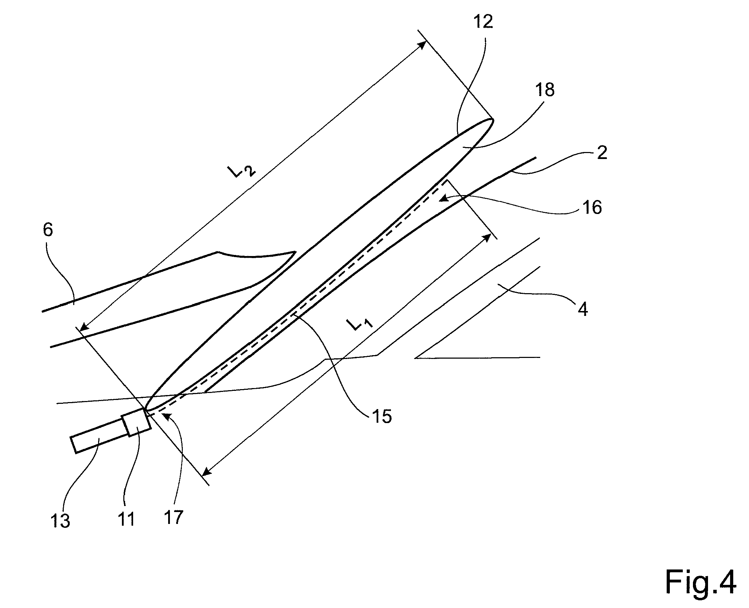

Figure 4 shows the airbag 12 in Figure 3 in its inflated position, extending over a portion of the windscreen 2 and the A-pillar 4. The airbag 12 is provided with an elongate reinforcement means 15 in the form of a relatively thin and narrow band. The band 15 is attached to the airbag 12 at a first portion 16 and is attached to a rigid part at a second portion 17, remote from the first portion 16. In this example, the first portion 16 of the elongate band 15 is attached to the airbag 12 at its outer end, while the second portion 17 is attached to the airbag container 11. Alternative examples of a suitable rigid part for attaching the second portion include an inflator bracket (not shown) supporting the inflating device 13 or the vehicle hood 6. The band 15 is wound with an elongate airbag chamber portion 18 to form a coiled airbag 12 located in the airbag housing 11. The band 15 is arranged to extend at parallel to the direction of the main axis of the elongate airbag chamber portion 18, in which direction the airbag 12 is unwound during inflation.

In order to maintain the band 15 in position relative to the elongate airbag chamber portion 18 it is attached to the airbag 12. In the example shown in Figure 4 the first portion 16 has its free end inserted into a pocket (not shown) at the underside of the airbag chamber portion 18. The pocket located at the first portion 16 is closed to contain the end of the band 15.

Alternative attachments can comprise multiple open pockets in or on the airbag, where the reinforcement means is inserted through each pocket, or a single pocket containing the full length of the band. Further alternative ways of attaching the band includes stitching or the use of an adhesive or similar.

Figure 5 shows an alternative arrangement, where an airbag 22 in its inflated position extends over a portion of the windscreen 2 and the A-pillar 4. The airbag 22 comprises a main elongate airbag chamber portion 28 and a first and second additional airbag chamber portion 31, 32 located between the main elongate airbag chamber portion 28 and the windscreen 2. The main elongate airbag chamber portion 28 comprises valves (not shown) allowing the additional airbag chamber portions 31, 32 to be inflated by the inflating device 23. The airbag 22 is provided with an elongate reinforcement means 25 in the form of a relatively thin and narrow band extending in channels between the main elongate airbag chamber portion 28 and the additional airbag chamber portions 31, 32. The band 25 is attached to the underside of the main elongate airbag chamber portion 28 at a first portion 26 and is attached to a rigid part at a second portion 27, remote from the first portion 26. In this example, the first portion 26 of the elongate band 25 is attached to the airbag 22 at its outer, free end, while the second portion 27 is attached to an airbag container 21 connected to an inflating device 23.

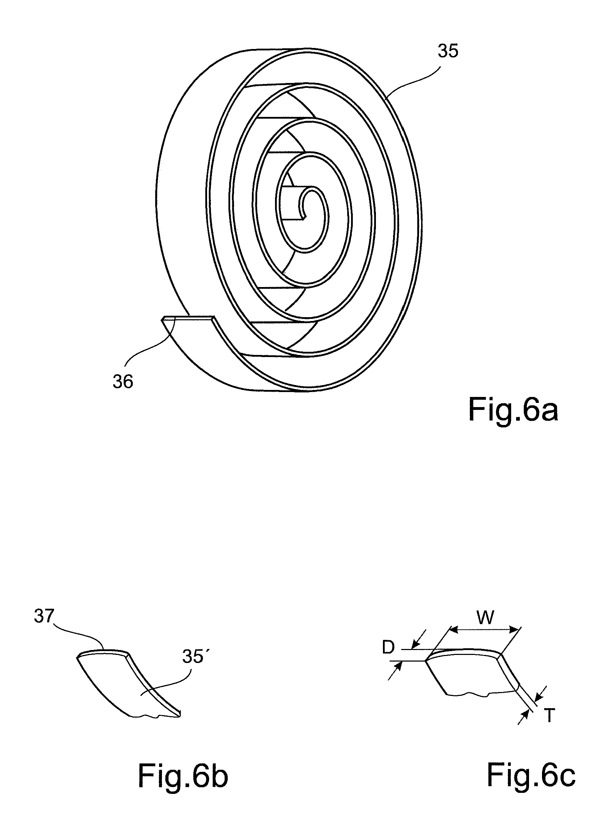

With reference to Figures 3-5, the elongate reinforcement means 15, 25 comprises a flexible band or strip of material. The band 15, 25 is selected relatively thin, to allow it to be wound into a coil 35 as indicated in Figure 6A, and with a width giving a relatively high stiffness in its lateral direction at right angles to its longitudinal extension, to provide increased stability for the airbag along the main axis of the elongate airbag chamber portion 18, 28.

The number of elongate reinforcement means and/or additional elongate reinforcement means used is determined by a comparison between the inherent lateral stiffness of the airbag arrangement and the desired lateral stiffness. This will be described in more detail in connection with Figure 7. The length of the elongate reinforcement means can be selected dependent on the extension of the airbag at that location and/or the required stiffness of the airbag arrangement. With reference to Figure 4, each band 15 has a longitudinal extension L1 of at least 50% of the longitudinal extension L2 of an adjacent elongate chamber portion 18.

The desired properties can be achieved by selecting a material having a predetermined minimum yield strength, such as a steel or polymer band. According to one example, spring steel is suitable for this purpose. Using a spring steel has the additional effect of assisting the airbag to extend and position itself during and after inflation.

Spring steel is a low-alloy, medium-carbon steel or high-carbon steel with very high yield strength. This allows objects made of spring steel to return to their original shape despite significant bending or twisting. The term yield strength refers to a material's ability to endure significant bending or twisting and return to its original shape without deforming. Spring steel alloys feature the unique characteristic of being able to withstand considerable twisting or bending forces without any distortion. Products made from these steel alloys can be bent, compressed, extended, or twisted continuously, and they will return to their original shape without suffering any deformation.

The elongate reinforcement means can comprise an elongated band 35, 35' having a flat cross-section 36, as shown in Figure 6A, or a curved cross-section 37, as shown in Figure 6B. If the band has a curved cross-section 37, the convex portion of the cross-section is arranged to face the center of the wound coil. When using a metal band, such as spring steel, suitable dimensions for thickness T and width W are in the range up to 0.6 mm and 15-20 mm, respectively. The dimensions are indicated in Figure 6C. When using a band having a convex cross-section the depth D, which is the distance measured at right angles to a central portion of the band from a lower convex surface to a line connecting the upper edges of the band, is at least twice the thickness.

Figure 7 describes a plan view of a vehicle with one example of an inflated airbag according to the invention. With reference to Figures 1 and 4, the airbag 12 in this example is intended to be inflated to cover one A-pillar 4. The airbag arrangement 7, 8 in this example are identical but mirrored. Elongate reinforcement means 15', 15" in the form of relatively thin and narrow bands are attached at one end to a rigid part of each of the airbag arrangement 8. The respective first and second elongate reinforcement means 15', 15" are attached to and extends from the airbag arrangement 8 in the direction of expansion of the airbag 12. The free end portions of the first and second elongate reinforcement means 15', 15" are attached to the lower side of the airbag chamber 18, facing the windscreen 2.

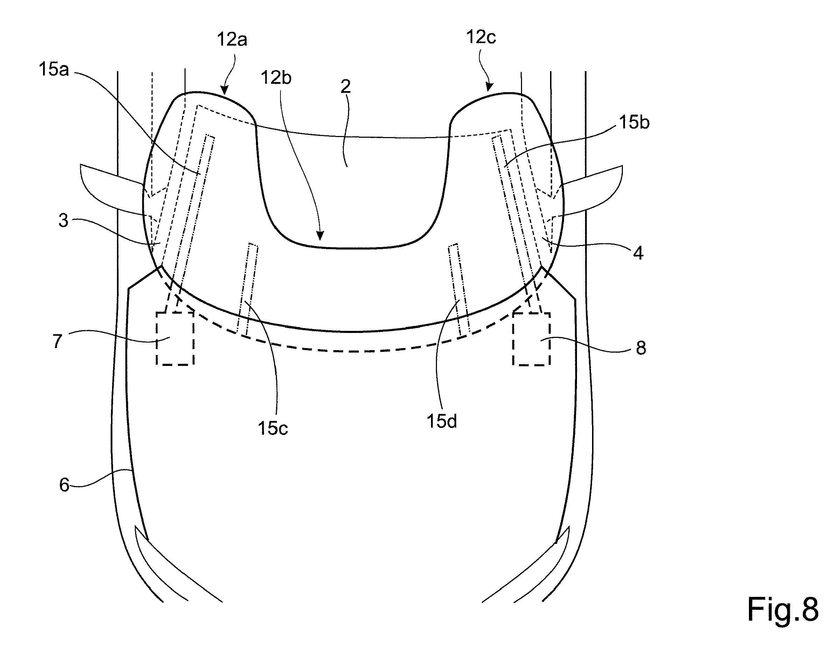

Figure 8 shows a plan view of a vehicle with a further example of an inflated airbag according to the invention. With reference to Figures 1 and 4, the airbag 12a, 12b, 12c in this example is intended to be inflated to a general U-shape covering the A-pillars 3, 4 and a portion of the windscreen 2. The airbag 12a, 12b, 12c comprises a first rear chamber 12a, a second rear chamber 12c and a central chamber 12b. The central chamber 12b is arranged to connect the rear chambers 12a, 12c and is deployed to cover a lower part of the windscreen 2. The first and second rear chambers 12a, 12c are intended to be deployed to run upwards and rearwards along their corresponding A-pillar 3, 4.

The first rear chamber 12a is inflated by the first airbag arrangement 7 and the second rear chamber 12c is inflated by the second airbag arrangement 8. An elongate reinforcement means 15a, 15b in the form of a relatively thin and narrow band is attached at one end to a rigid part of the first and second airbag arrangement 7, 8, respectively. The respective first and second elongate reinforcement means 15a, 15b are attached to and extends from their corresponding first and second airbag arrangement 7, 8 in the direction of expansion of the first and second rear chambers 12a, 12c, respectively. The free end portions of the first and second elongate reinforcement means 15a, 15b are attached to the lower side of the respective first and second rear chambers 12a, 12c, facing the windscreen 2.

Additional elongate reinforcement means 15c, 15d are arranged intermediate those airbag arrangements 7, 8 comprising an inflation device. Each such additional elongate reinforcement means 15c, 15d is arranged to extend in the direction of extension of the airbag portion to which it is attached. The additional elongate reinforcement means 15c, 15d have a shorter longitudinal extension than the elongate reinforcement means 15a, 15b arranged at the airbag arrangements 7, 8 in order to conform to the shape of the inflated airbag 12a, 12b, 12c. Each elongate reinforcement means 15a, 15b, 15c, 15d is arranged to extend over a major portion of the longitudinal extension of an adjacent elongate chamber portion 12a,12b,12c. The extension of the elongate reinforcement means is at least 50% of the longitudinal extension of the adjacent airbag portion, preferably 70-95% thereof. The length of the elongate reinforcement means can be selected dependent on the extension of the airbag at that location and/or the required stiffness of the airbag arrangement.

The example shown in Figure 8 shows an airbag having one elongate reinforcement means 15a, 15b attached to each airbag arrangement 7, 8 combined with two intermediate elongate reinforcement means 15c, 15d. The number of elongate reinforcement means and any additional elongate reinforcement means used is determined by a comparison between the inherent lateral stiffness of the airbag arrangement and the desired lateral stiffness required to prevent sideways displacement of the airbag or a portion thereof.

In an alternative example of the airbag in Figure 8, a first rear chamber, a second rear chamber and a central chamber 12b are all inflated by a common central airbag. In this case, multiple elongate reinforcement means will extend from the central airbag arrangement in a way similar to the airbag arrangement shown in Figure 7.

The invention is not limited to the examples above, but may vary freely within the scope of the appended claims. For example, the airbag does not have to be inflated to a U-shape, as any suitable shape is possible; such as a dog-bone shape. Also, the number of elongate reinforcement means as well as their respective length, shape, width and thickness can be selected freely to achieve the desired lateral stiffness of the airbag. Hence, adjacent reinforcement means can each have a different longitudinal extension, cross-sectional shape (flat/curved) and dimension (thickness/width).

## Claims

1. An airbag arrangement (7, 8) comprising at least one airbag (12; 12a, 12b, 12c) having at least one elongate chamber portion (18; 23), an airbag container (11; 21), and an inflating device (13; 23), the airbag (12; 12a, 12b, 12c) being arranged to be inflated by the inflating device (13; 23) in the case of a collision with a pedestrian when the airbag arrangement (7, 8) is mounted in a vehicle (1), **characterized in that** the airbag (12; 22; 12a, 12b, 12c) comprises an elongate reinforcement means (15; 25; 35; 15a, 15b, 15c, 15d) attached to the airbag at a first portion (16; 26) and attached to a rigid part at a second portion (17; 27), remote from the first portion, wherein the direction of the reinforcement means is adjoined with the main axis of the elongate airbag chamber portion (18; 23).

2. An airbag arrangement according to claim 1, **characterized in that** the elongate reinforcement means (15; 25; 35; 15a, 15b, 15c, 15d) is wound with the airbag (12; 22; 12a, 12b, 12c) prior to inflation.

3. An airbag arrangement according to claims 1 or 2, **characterized in that** the elongate reinforcement means (15; 25; 35; 15a, 15b, 15c, 15d) comprises a band of flexible material.

4. An airbag arrangement according to claim 3, **characterized in that** the elongate reinforcement means (15; 25; 35; 15a, 15b, 15c, 15d) comprises a material having a predetermined yield strength.

5. An airbag arrangement according to claim 3 or 4, **characterized in that** the material is a steel band.

6. An airbag arrangement according to claim 3 or 4, **characterized in that** the material is a polymer band.

7. An airbag arrangement according to any one of claims 3-6, **characterized in that** the material has a convex cross-section

8. An airbag arrangement according to any one of claims 2-7, **characterized in that** the inflating device (13; 23) is connected to a release means arranged to trigger unwinding of the wound elongate reinforcement means (15; 25; 35; 15a, 15b, 15c, 15d).

9. An airbag arrangement according to any one of the above claims, **characterized in that**, when inflated, at least one elongate chamber portion (12; 22) is arranged between an object impacting the airbag arrangement and the elongate reinforcement means (15; 25; 35; 15a, 15b, 15c, 15d).

10. An airbag arrangement according to claim 9, **characterized in that**, when inflated, at least one further chamber portion (31, 32) is arranged between the vehicle and the elongate reinforcement means (25).

11. An airbag arrangement according to any one of the above claims, **characterized in that** one elongate reinforcement means (15; 25; 35; 15a, 15b, 15c, 15d) is arranged adjacent each inflation device

12. An airbag arrangement according to any one of the above claims, **characterized in that** at least one additional elongate reinforcement means (15c, 15d) is arranged intermediate each inflation device.

13. An airbag arrangement according to any one of the above claims, **characterized in that** each elongate reinforcement means has a longitudinal extension of at least 50% of the longitudinal extension of an adjacent elongate chamber portion.

14. An airbag arrangement according to any one of the above claims, **characterized in that** the second portion (17; 27) of the elongate reinforcement means (15; 25; 35; 15a, 15b) is attached to the airbag container (11; 21).

15. An airbag arrangement according to any one of the above claims 1-12, **characterized in that** the second portion (17; 27) of the elongate reinforcement means (15; 25; 35; 15a, 15b) is attached to an inflator bracket supporting the inflating device (13; 23).

16. An airbag arrangement according to any one of the above claims 1-12, **characterized in that** the second portion (17; 27) of the elongate reinforcement means (15; 25; 35; 15a, 15b, 15c, 15d) is attached to a vehicle hood (6).

17. An airbag arrangement according to any one of the above claims, **characterized in that** the airbag arrangement is a vehicle pedestrian protection airbag.
